# EUROPÄISCHE PATENTSCHRIFT

(11) **EP 3 369 972 B1**
(45) Veröffentlichungstag und Bekanntmachung des Hinweises auf die Patenterteilung: **08.04.2020**
(21) Anmeldenummer: 18156547.4
(22) Anmeldetag: 13.02.2018
(51) Int. Cl.: F16K 3/08, F16K 3/10, F16K 11/074

(54) **SCHEIBENVENTIL**
DISC VALVE
SOUPAPE À DISQUE

(30) Priorität: 02.03.2017 DE 102017203463
(43) Veröffentlichungstag der Anmeldung: 05.09.2018
(73) Patentinhaber: BSH Hausgeräte GmbH, 81739 München (DE)
(72) Erfinder: Einsiedler, Thomas, 83278 Traunstein (DE); Höglauer, Michael, 83246 Unterwössen (DE); Siebert, Sebastian, 83278 Traunstein (DE)

(56) Entgegenhaltungen:
- DE-A1-102014 104 221
- DE-A1-102014 205 269
- US-A- 2 100 366
- US-A1- 2007 199 599

## Beschreibung

Die Erfindung betrifft ein Scheibenventil, insbesondere ein Mehrwegeventil, für den Einsatz in Heißgetränkegeräten.

Die DE 10 2014 205 269 A1 beschreibt ein keramisches Scheibenventil für Einrichtungen zur Zubereitung von Heißgetränken, insbesondere für Kaffeevollautomaten. Das Scheibenventil umfasst eine Fluidzuleitung, eine Fluidableitung und ein Gehäuse als Haltevorrichtung. In der Haltevorrichtung sind dicht aneinander anliegende und gegeneinander verstellbare keramische Ventilscheiben angeordnet, nämlich wenigstens eine feststehende Verteilerscheibe und wenigstens eine verstellbare Steuerscheibe. Zur Abdichtung der Ventilscheiben gegenüber dem Gehäuse umfassen sie jeweils eine Dichtung. Das Scheibenventil zeichnet sich durch Federelemente zum Aufbringen eines Vorspanndrucks bzw. einer Vorspannung zwischen dem Gehäuse und den Ventilscheiben aus, um eine Dichtwirkung insbesondere zwischen den Ventilscheiben auch dann aufrecht zu erhalten, wenn am Scheibenventil ein druckbeaufschlagtes Fluid anliegt. Die Vorspannung der Federelemente kann das Schalten des drucklosen Scheibenventils erschweren. Die US 2007/199599 A1 offenbart ein Scheibenventil mit einem eine Ventilscheibe und eine Steuerscheibe umfassenden Gehäuse und einer Einrichtung zum Aufbringen einer fluiddruckabhängigen Druckkraft auf die Scheibenanordnung. Die DE 10 2014 104 221 A1 offenbart eine Wasserweiche zur Verteilung von Fluid mit einer Verteilscheibe, die relativ zum Gehäusedeckel axial verschieblich innerhalb des Volumenraums angeordnet ist.

Aufgabe der vorliegenden Erfindung ist es, ein Scheibenventil mit einer längeren Lebensdauer zur Verfügung zu stellen, wobei das Scheibenventil, insbesondere über die Lebensdauer des dieses Ventil umfassenden Heißgetränkegeräts, ausreichend dicht bleibt.

Diese Aufgabe wird durch ein Scheibenventil, insbesondere ein Mehrwegeventil, mit einem zumindest eine Ventilscheibe und eine Steuerscheibe umfassenden Gehäuse gelöst, das eine Fluidzuleitung und eine Fluidableitung aufweist. Die Fluidzuleitung und die Fluidableitung sind räumlich durch die Ventilscheibe und die Steuerscheibe getrennt.

Die Steuerscheibe ist gegenüber der feststehenden Ventilscheibe um eine in Flussrichtung verlaufende Drehachse drehbar gelagert, und beide Scheiben sind jeweils mit mindestens einer Durchgangsöffnung versehen, so dass eine Überlagerung der Durchgangsöffnungen der Ventilscheibe und der Steuerscheibe einen Fluidfluss entlang einer Flussrichtung von der Fluidzuleitung zu der Fluidableitung ermöglicht. Das Scheibenventil umfasst außerdem eine Einrichtung zum Aufbringen einer gewissen Vorspannung auf die Ventil- und Steuerscheibe(n) in Achsrichtung, sodass ihre aneinander anliegenden Scheibenflächen bereits anfänglich druckdicht abdichten. Die Erfindung zeichnet sich durch eine Einrichtung zum Aufbringen einer fluiddruckabhängigen Druckkraft auf zumindest die Scheibenanordnung aus Ventilscheibe(n) und Steuerscheibe aus. Die Einrichtung umfasst dazu einen an sich fluiddurchgängigen Druckaufnehmer, auf den der am Gehäuse bzw. an der Fluidzuleitung anliegende Fluiddruck wirkt und der den auf ihn wirkenden Druck an die Scheibenanordnung weitergibt. Zur begrifflichen Abgrenzung gegenüber einer an der Scheibenanordnung eventuell anliegenden Vorspannung wird im Folgenden insofern von einer aus dem Fluiddruck resultierenden Druckkraft auf die Scheibenanordnung gesprochen. Sofern Dichtungsscheiben stromauf und/oder stromab der Ventilscheiben angeordnet sind, wirkt die Druckkraft auch auf sie. Die Erfindung wendet sich davon ab, die bei Anliegen eines druckbeaufschlagten Fluids sich reduzierende Vorspannung durch das dauerhafte Aufbringen einer größeren Vorspannung mittels elastischer Elemente auszugleichen. Sie verfolgt vielmehr das Prinzip, den Druck des druckbeaufschlagten Fluids selbst als Kraftquelle für eine zusätzliche Druckkraft auf die Scheibenanordnung zu nutzen.

Erfindungsgemäß umfasst das Scheibenventil als derartige Einrichtung einen in und entgegen Flussrichtung beweglichen Schieber im Gehäuse, der stromauf der Ventilscheibe und der Steuerscheibe angeordnet ist. Der Schieber ist um die Drehachse in Flussrichtung drehfest gehalten, so dass er sich relativ zur Ventilscheibe und zur Steuerscheibe nicht drehen kann. Erweist ebenfalls Durchgangsöffnungen auf, die denen der Ventilscheibe entsprechen, so dass er einen Fluidfluss durch die Ventilscheibe und durch die Steuerscheibe hindurch nicht behindert. Liegt nämlich bestimmungsgemäß ein druckbelastetes Fluid am Gehäuse an, trifft es zunächst auf den Schieber. Es drückt den Schieber auf die Scheibenanordnung aus Ventilscheibe(n) und Steuerscheibe, die ihrerseits zusammen gedrückt werden. Dadurch wird die Fluiddichtigkeit der Scheibenanordnung bzw. zwischen der (den) Ventilscheibe(n) und der Steuerscheibe verbessert, indem ein Verlust an Vorspannung zumindest ausgeglichen wird. Liegt kein Fluiddruck am Gehäuse an, steht die Scheibenanordnung nicht mehr unter der Einwirkung der Druckkraft des Fluids, sondern nur noch unter der Einwirkung der Vorspannung, so dass die Steuerscheibe mit geringerem Kraftaufwand und geringerem Verschleiß gegenüber der (den) Ventilscheibe(n) verdreht werden kann.

Die Steuerscheibe ist regelmäßig zwischen zwei Ventilscheiben gelagert, wovon im Folgenden der Einfachheit halber ausgegangen wird, auch wenn Scheibenanordnungen mit nur einer Ventilschiebe und nur einer Steuerscheibe möglich und erfindungsgemäß nicht ausgeschlossen sind. Das Scheibenventil umfasst regelmäßig stromauf und stromab der Scheibenanordnung ring- oder scheibenförmige Dichtungselemente, die jedenfalls zwischen einer oberen Ventilscheibe, die stromauf der Steuerscheibe oder bezüglich des Scheibenventils eingangsseitig liegt, und einem oberen Gehäuseabschnitt und einer unteren Ventilscheibe, die stromab der Steuerscheibe oder ausgangsseitig liegt, und einem unteren Gehäuseabschnitt angeordnet sind. Nach einer vorteilhaften Ausführungsform der Erfindung ist ein Dichtungselement zwischen dem Schieber und der oberen bzw. eingangsseitigen Ventilscheibe angeordnet. Damit übt der druckbelastete Schieber seine Druckkraft auf die Scheibenanordnung samt Dichtungselementen und über sie letztlich auf das Gehäuseunterteil aus, womit er die Dichtwirkung der Scheiben untereinander und die Wirkung der Dichtungselemente insbesondere gegenüber dem Gehäuseunterteil unterstützt. Um eingangsseitige Druckverluste zu vermeiden, ist der Schieber selbst vorzugsweise über einen umfangsseitigen Dichtungsring gegenüber dem oberen Gehäuseabschnitt abgedichtet.

Erfindungsgemäß übernehmen die Dichtungselemente als in der Regel elastische Elemente zusätzlich die Aufgabe der oben genannten Einrichtung zum Aufbringen einer Vorspannung und erzeugen eine Vorspannung auf die Scheibenanordnung. Sie kann grundsätzlich durch eine gewisse Verpressung der Dichtungselemente samt der dazwischen liegenden Scheibenanordnung zwischen dem oberen und unteren Gehäuseabschnitt erreicht werden. Die Zwischenschaltung des Schiebers zwischen dem oberen Gehäuseabschnitt und dem oberen Dichtungselement steht dem nicht entgegen. Alternativ oder zusätzlich kann die Vorspannung durch andere und separat angeordnete elastische Elemente aufgebracht werden wie zum Beispiel durch die Anordnung von Druckfedern.

Das Scheibenventil kann viele verschiedene Formen annehmen. Allen Scheibenventilen gemeinsam ist jedoch der grundsätzliche Aufbau mit relativ zueinander drehbaren Scheiben im Inneren des Gehäuses und dass es eine bestimmungsgemäße Flussrichtung gibt, entlang der ein Fluid bei geeigneter Positionierung der Durchgangsöffnungen fließen kann. Das Scheibenventil kann bevorzugt als Schließventil, Regelventil oder Mehrwege ventil ausgestaltet sein. Insbesondere im Falle einer Ausgestaltung als Mehrwegeventil weist die Fluidableitung mehrere separate Auslasskanäle und die Ventilscheibe mehr als eine Öffnung auf, die so gestaltet sind, dass ein Fluidfluss aus der Fluidzuleitung durch eine der Durchgangsöffnungen in einen Auslasskanal der Fluidableitung mündet und ein Fluidfluss aus derselben Fluidzuleitung durch eine andere der Durchgangsöffnungen in einen anderen Auslasskanal.

Das Gehäuse kann vorzugsweise mehrteilig aufgebaut sein und einzelne Abschnitte umfassen, die im zusammengebauten Zustand mechanisch zugfest, aber nicht zwingend fluiddicht aneinandergefügt sind. Dies ermöglicht eine einfache Montage des Scheibenventils. Bevorzugt sind die Abschnitte voneinander lösbar ausgebildet, weil dies die Reparatur des Scheibenventils erleichtert.

Gemäß einer bevorzugten Ausführungsform ist der Bereich des Fluideinlasses im Scheibenventil zweiteilig aus einem oberen Gehäuseabschnitt bzw. dem Einlassgehäuse und einem Schieber aufgebaut. Das Einlassgehäuse kann fest und lösbar mit einem unteren Gehäuseabschnitt, dem Auslassgehäuse verbunden sein, an dem die Fluidableitung angeordnet ist. In dem Gehäuse sind mindestens eine Ventilscheibe und mindestens eine Steuerscheibe und optional die scheibenförmigen Dichtungselemente übereinanderliegend angeordnet. Die Stirnseiten des oberen und des unteren Gehäuseabschnitts sind innenseitig vorzugsweise mit flachen oder gewölbten Wandungen abgeschlossen, in die die Fluidleitungen münden. Die Fluidzuleitung und die Fluidableitung liegen sich folglich an den Stirnseiten der jeweiligen Gehäuseabschnitte gegenüber.

Nach einer weiteren vorteilhaften Ausgestaltung der Erfindung ist im Einlassgehäuse zwischen der Mündung der Fluidzuleitung und dem Schieber, also stromab der Mündung der Fluidleitung und stromauf des Schiebers ein Einlassraum angeordnet, der fluidisch zwischen die Fluidzuleitung und die Durchgangsöffnungen im Schieber geschaltet ist und in den hinein sich der Schieber nicht verschieben lässt. Der Einlassraum verfügt über ein eigenes Volumen zwischen der Fluidzuleitung und dem Schieber und bewirkt nicht nur eine Verteilung und Führung des Fluids vom Fluideinlass zu den Durchgangsöffnungen des Schiebers, sondern sichert auch die Kraftwirkung des druckbeaufschlagten Fluids auf den Schieber. Ein Anstieg eines Fluiddrucks P in der Fluidzuleitung und insbesondere im Einlassraum bewirkt im Bereich einer der Fluidzuleitung zugewandten Oberfläche A des Schiebers eine resultierende Kraft F (F = P x A), die den Schieber in Strömungsrichtung bzw. von der Mündung der Fluidzuleitung wegdrückt. Da das Einlassgehäuse fest mit dem Auslassgehäuse verbunden ist, wirkt diese Kraft vollständig auf den Schieber. Jener gibt die Kraft an die Scheibenanordnung weiter.

Mit der Dimensionierung der Druckfläche lässt sich die Größe der druckinduzierten Druckkraft F und damit der Dichtwirkung des Schiebers in Abhängigkeit vom Fluiddruck voreinstellen. Je größer die Fläche A, desto größer ist die resultierende Druckkraft F auf den Schieber und damit auf die Scheibenanordnung. Erfindungsgemäß liegt sie jedenfalls über derjenigen der Vorspannkraft, die die Einrichtung zum Aufbringen einer Vorspannung hervorruft. Bei einer Verminderung des Fluiddruckes reduziert sich die Druckkraft im Dichtungssystem wieder, so dass allein die voreingestellte Vorspannung verbleibt.

Liegen der Fluideinlass und die Durchgangsöffnung(en) im Schieber nicht auf derselben Achse, kann sich ein Einlassraum auch bilden, sobald der Fluiddruck den Schieber vom Fluideinlass wegdrückt. Dafür steht zunächst nur eine Fläche A auf dem Schieber zur Verfügung, die der Querschnittsfläche des Fluideinlasses entspricht. Wenn sie zu klein ist und bei hohen Fließgeschwindigkeiten ist ein separat ausgebildeter Einlassraum wie oben beschrieben jedoch von Vorteil, da dadurch für den zweiten Fall ein aufgrund des Fluidflusses eventuell partiell auftretender Unterdruck verhindert wird.

Gemäß einer weiteren bevorzugten Ausführungsform kann die der Fluidzuleitung zugewandte Oberfläche des Schiebers eine konkave Wölbung oder eine Ausnehmung aufweisen, so dass sich durch die Form in der Oberfläche des Schiebers ein Einlassraum zwischen ihm und dem Einlassgehäuse ergibt. Eine konkave Form der Oberfläche hat darüber hinaus, insbesondere, wenn innerhalb der konkaven Wölbung auch die Durchgangsöffnungen des Schiebers liegen, noch den Vorteil, dass ein strömendes Fluid einen zusätzlichen dynamischen Druck auf den Schieber ausübt.

Gemäß einer weiteren bevorzugten Ausführungsform, kann die der Fluidzuleitung zugewandte Oberfläche des Schiebers alternativ oder zusätzlich Kanäle aufweisen, die von der Position, an der durch die Fluidzuleitung einfließendes Fluid auf den Schieber trifft, zu den Durchgangsöffnungen führen. Auf diese Weise wird eine verbesserte Lenkung des Fluidflusses zu den Durchgangsöffnungen erreicht.

Der Schieber ist lateral in Durchflussrichtung des Scheibenventils entlang dessen Längsachse verschiebbar, aber nicht verdrehbar gelagert, damit die Durchgangsöffnungen des Schiebers stets mit den Durchgangsöffnungen der Ventilscheiben fluchten. Dazu kann der Schieber vorzugsweise formschlüssig so gehalten sein, dass eine Verdrehung um die Längsachse des Ventils blockiert wird, eine laterale Verschiebung entlang der Längsachse des Ventils aber möglich ist. Dies kann mittels einer geeigneten Ausformung des Innenraumes des Einlassgehäuses im Bereich des Schiebers und dessen entsprechender Umrissform erreicht werden, beispielsweise durch eine polygonale Form. Alternativ oder zusätzlich können Führungsstrukturen, z.B. Nuten oder Federn, am Einlassgehäuse angebracht sein, die mit entsprechenden Strukturen am Schieber, z.B. Federn oder Nuten korrespondieren.

Zur Ausbildung einer längsverschieblichen, aber drehfesten Lagerung des Schiebers, aber auch zur Ausbildung eines Einlassraums kann der Innenraum des Einlassgehäuses in Flussrichtung abschnittsweise unterschiedliche Querschnittsformen aufweisen. Vorzugsweise erweitert er sich stufenweise in Flussrichtung, was die Montage des Scheibenventils begünstigt. In Flussrichtung kann er beispielsweise einen zylindrischen Einlassraum geringeren Durchmessers, anschließend einen polygonalen Raum mit einem Umkreis eines größeren Durchmessers für die Lagerung des Schiebers und schließlich den an sich bekannten zylindrischen Innenraum größten Durchmessers für die Aufnahme der Scheibenanordnung ggf. samt Dichtungselementen aufweisen.

Die Scheiben (Steuerscheibe und/oder Ventilscheibe) und/oder der Schieber weisen einen Mittelpunkt auf und sind bevorzugt rotationssymmetrisch gestaltet. Zumindest die Steuerscheibe ist dabei bevorzugt kreisrund, so dass eine Drehung in dem Gehäuse um ihren Mittelpunkt möglich ist. Die Scheiben sind bevorzugt koaxial orientiert, so dass ihre Mittelpunkte auf einer gemeinsamen Achse, der Drehachse aufeinanderliegen, wobei bei einem zylindrischen oder zylindersymmetrischen Innenraum des Gehäuses die Achse die Längsachse des Zylinders darstellt bzw. dessen Symmetrieachse. Die Steuerscheibe ist regelmäßig zwischen zwei Ventilscheiben gelagert, wobei die beiden Ventilscheiben bezüglich der Anordnung und/oder Form ihrer Durchgangsöffnungen bevorzugt identisch sind.

Die Materialwahl für die Herstellung des Scheibenventils hängt im Wesentlichen von seiner Druckbelastung ab und lässt prinzipiell insbesondere Metall und Kunststoff zu. Vorzugsweise sind die Ventilscheibe und/oder die Steuerscheibe und/oder der Schieber oder zumindest eine der Oberflächen mindestens einer der Scheiben bzw. des Schiebers aus Keramik gefertigt. Dies reduziert den Verschleiß und erhöht die Lebensdauer des Ventils.

Das Prinzip der Erfindung wird im Folgenden anhand einer Zeichnung beispielshalber noch näher erläutert. In der Zeichnung zeigen:
- Figur 1:: eine perspektivische Ansicht eines bevorzugten Scheibenventils, und
- Figur 2:: eine Schnittansicht des Scheibenventils.

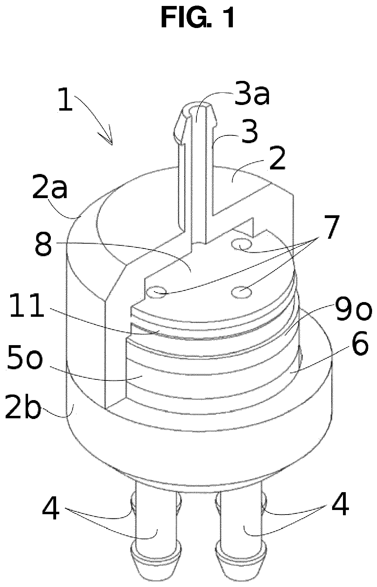

Figur 1 zeigt eine perspektivische, teilgeschnittene Ansicht eines bevorzugten Ausführungsbeispiels eines Scheibenventils 1. Das Scheibenventil 1 umfasst ein zylindrisches Gehäuse 2, welches aus zwei mechanisch fest aneinandergefügten Segmenten, dem Einlassgehäuse 2a und dem Auslassgehäuse 2b, besteht. Das Auslassgehäuse 2b ist vollständig dargestellt, das Einlassgehäuse 2a ist aufgeschnitten, um einen Blick in das Innere des Scheibenventils 1 zu erlauben. Oben am Gehäuse 2 ist zentrisch eine Fluidzuleitung 3 angeordnet, mittels derer ein Fluid über einen Einlasskanal 3a in den Innenraum des Gehäuses 2 gelangen kann. Unten am Gehäuse 2 und der Fluidzuleitung 3 gegenüberliegend ist eine Fluidableitung 4 zu sehen, durch die das Fluid das Ventil 1 verlassen kann.

Im Inneren des Gehäuses 2 sind von unten nach oben eine untere Dichtungsscheibe 9u, eine untere Ventilscheibe 5u, eine Steuerscheibe 6, eine obere Ventilscheibe 5,o eine obere Dichtungsscheibe 9o und ein Schieber 8 angeordnet. Die Ventilscheiben 5o, 5u führen zwischen sich formschlüssig die Steuerscheibe 6 und diese kann sich zwischen den beiden Ventilscheiben 5o, 5u um die vertikale Längsachse des Ventils 1 im Innenraum des Gehäuses 2 drehen. Die Scheiben 5o, 5u, 6 und der Schieber 8 sind zylinderförmig. Der Schieber 8 trägt zusätzlich auf der Mantelfläche eine umlaufende Nut, in der ein Dichtungsring 11 eingesetzt ist.

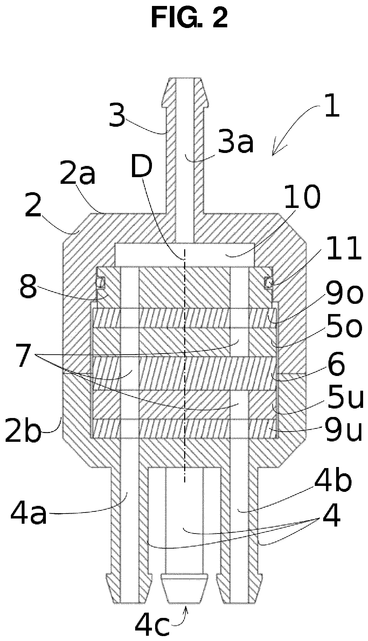

Im oberen Bereich des Schiebers 8 sind Durchgangsöffnungen 7 zu erkennen, die zu Durchgangsbohrungen (vgl. Figur 2) gehören, durch die das Fluid hindurchfließen kann. Die Durchgangsöffnungen 7 bzw. Bohrungen befinden sich an entsprechender Stelle auch in den beiden Ventilscheiben 5o, 5u. Die Steuerscheibe 6 weist an entsprechender radialer Position zumindest eine Öffnung auf, die bei geeigneter Drehung der Steuerscheibe 6 mit einer der Durchgangsöffnungen 7 in dem Schieber 8 und in den Ventilscheiben 5o, 5u fluchtet und einen Fluidfluss erlaubt. Es ist von Vorteil, wenn sich die Durchgangsöffnungen 7 genau über den Auslasskanälen 4a, 4b, 4c (Fig. 2) der Fluidableitung 4 befinden, so dass das durch die Durchgangsöffnungen 7 im Schieber 8 und den Scheiben 5o, 5u, 6 hindurchfließende Fluid das Scheibenventil 1 unmittelbar durch einen der Auslasskanäle 4a, 4b, 4c (Fig. 2) verlassen kann.

Figur 2 zeigt eine Schnittansicht des Scheibenventils 1 aus Figur 1. Die zwei Segmente 2a, 2b des Gehäuses 2 sind durch unterschiedliche Schraffuren kenntlich gemacht. Die Schnittebene verläuft senkrecht entlang einer Längs- und Drehachse D des Ventils 1. Der bestimmungsgemäße Fluidfluss verläuft von oben nach unten. Oben bzw. am Einlassgehäuse 2a ist eine Fluidzuleitung 3 angeordnet, deren Einlasskanal 3a erkennbar ist, und unten verläuft der Schnitt durch zwei Auslasskanäle 4a, 4b der Fluidableitung 4. Im Inneren des Gehäuses 2 befinden sich von unten nach oben eine untere Dichtungsscheibe 9u, eine untere Ventilscheibe 5u (die beide im Teilschnitt der Figur 1 nicht zu sehen sind), die Steuerscheibe 6, die obere Ventilscheibe 5o, die obere Dichtungsscheibe 9o und der Schieber 8 mit dem Dichtungsring 11.

Über dem Schieber 8 ist ein zylindrischer Einlassraum 10 zu erkennen, in den der Schieber 8 aufgrund seines größeren Durchmessers nicht hereinbewegt werden kann. Der Einlassraum 10 verteilt einströmendes Fluid aus dem Fluideinlass 3 auf die Durchgangsöffnungen 7.

Fließt ein Fluid durch den Einlasskanal 3a in den Einlassraum 10, trifft es zunächst auf den Schieber 8. Bei geschlossenem Ventil 1 drückt der Druck, den das Fluid auf den Schieber 8 ausübt, den Schieber 8 nach unten auf die Ventil- und Steuerscheiben 5o, 5u, 6. Er drückt die Scheiben 5o, 5u, 6 gegeneinander und dichtet sie ab. Die Dichtungsscheiben 9o, 9u unterstützen die dichtende Wirkung in Strömungsrichtung gegenüber dem Gehäuse 2, wobei die obere Dichtscheibe 9o gegenüber dem Schieber 8 einerseits und der oberen Ventilscheibe 5o und die untere Dichtscheibe 9u gegenüber der unteren Ventilscheibe 5u und dem Gehäuseunterteil 2b abdichtet. Der anliegende Fluiddruck selbst sorgt also für ein zuverlässig dicht schließendes Scheibenventil 1.

Sobald das Scheibenventil 1 geöffnet wird, gelangt das Fluid durch die Durchgangsöffnungen 7 des Schiebers 8 und die Bohrungen in den Scheiben 5o, 5u, 6 zu dem Auslasskanal 4a. Damit baut sich zwar der Druck auf den Schieber 8 und auf die Scheiben 5o, 5u, 6, 9o, 9u ab. Sie brauchen nun diesem Druck aber nicht mehr dichtend standzuhalten.

Durch eine geeignete Dimensionierung des Innenraumes und der Dicke der Ventil- und Steuerscheibe(n) 5o, 5u, 6, des Schiebers 8 und der Dichtungsscheiben 9o, 9u kann die Elastizität der Dichtungsscheiben 9o, 9u dazu genutzt werden, eine Vorspannung auf die Ventil- und Steuerscheiben 5o, 5u, 6 auch bei Nichtvorliegen eines Fluidflusses zu erreichen. Die Vorspannung kann durch die erfindungsgemäße Konstruktion betragsmäßig deutlich unter der Druckkraft liegen, die infolge Fluiddrucks auf die Scheiben 5o, 5u, 6 ausgeübt wird. Sie liegt dauerhaft an und ist wichtig dafür, dass das Scheibenpaket aus den Scheiben 5o, 5u, 6 bereits anfänglich dicht ist.. Wegen ihres geringeren Betrags unterliegt die Vorspannung nun einem geringeren Alterungseinfluss, womit das Scheibenventil 1 über seine Lebensdauer leichtgängig bleibt und ein Antrieb bzw. Motor für die Steuerscheibe 6 kostengünstig dimensioniert werden kann.

Da es sich bei den vorhergehenden, detailliert beschriebenen Ausführungsformen um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen der Scheiben in anderer Form als in der hier beschriebenen folgen. Ebenso kann das Gehäuse in einer anderen Form ausgestaltet werden, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrmals oder mehrfach vorhanden sein können.

### Bezugszeichenliste

- 1: Scheibenventil
- 2: Gehäuse
- 2a: Einlassgehäuse
- 2b: Auslassgehäuse
- 3: Fluidzuleitung
- 3a: Einlasskanal
- 4: Fluidableitung
- 4a, 4b, 4c: Auslasskanal
- 5o: obere Ventilscheibe
- 5u: untere Ventilscheibe6 Steuerscheibe
- 7: Öffnung
- 8: Schieber
- 9o: obere Dichtungsscheibe
- 9u: untere Dichtungsscheibe10 Einlassraum
- 11: Dichtungsring
- D: Drehachse

## Patentansprüche

1. Scheibenventil (1) mit einem eine Ventilscheibe (5) und eine Steuerscheibe (6) umfassenden Gehäuse (2), das eine Fluidzuleitung (3) und eine Fluidableitung (4) aufweist, welche durch die Ventilscheibe (5) und die Steuerscheibe (6) getrennt sind, wobei die Steuerscheibe (6) zu der Ventilscheibe (5) um eine in Flussrichtung verlaufende Drehachse (D) drehbar gelagert ist und beide Scheiben jeweils mit mindestens einer Durchgangsöffnung (7) versehen sind, so dass bei einer Überlagerung der Durchgangsöffnungen (7) der Ventilscheibe (5) und der Steuerscheibe (6) ein Fluidfluss entlang einer Flussrichtung von der Fluidzuleitung (3) zu der Fluidableitung (4) möglich ist, einem in Flussrichtung beweglichen Schieber (8) im Gehäuse (2), der stromauf der Ventilscheibe (5) und der Steuerscheibe (6) angeordnet ist, der um die Drehachse (D) drehfest gehalten ist und der Durchgangsöffnungen (7) aufweist, die denen der Ventilscheibe (5) entsprechen, als Einrichtung zum Aufbringen einer fluiddruckabhängigen Druckkraft und Dichtungselementen (9) jeweils stromauf und stromab der Scheibenanordnung (5, 6), wobei ein Dichtungselement (9) zwischen dem Schieber (8) und einer eingangsseitigen Ventilscheibe (5) angeordnet ist und die Dichtungselemente (9) zusätzlich als Einrichtung zum Aufbringen einer Druckvorspannung auf die Scheibenanordnung (5, 6) ausgebildet sind, wobei die aus einer Dimensionierung einer Druckfläche und einem Fluiddruck eines bestimmungsgemäß am Gehäuse (2) anliegenden druckbelasteten Fluids resultierende Druckkraft (F) auf den Schieber (8) und damit auf die Scheibenanordnung (5, 6) über derjenigen der Vorspannkraft liegt, die die Einrichtung zum Aufbringen der Druckvorspannung hervorruft, **und** wobei der Schieber (8) und damit die Scheibenanordnung (5, 6) ohne am Gehäuse (2) anliegenden Fluiddruck nur unter Einwirkung der Vorspannung stehen.

2. Scheibenventil (1) nach Ansprch 1, **dadurch gekennzeichnet, dass** das Gehäuse (2) einzelne Abschnitte (2a; 2b) umfasst, die im montierten Zustand mechanisch zugfest aneinander gefügt und voneinander lösbar sind.

3. Scheibenventil (1) nach 1 oder 2, **gekennzeichnet durch** einen Einlassraum (10) zwischen der Fluidzuleitung (3) und dem Schieber (8).

4. Scheibenventil (1) nach Anspruch 3, **gekennzeichnet durch** eine konkave Wölbung im Schieber (8) auf dessen der Fluidzuleitung (3) zugewandten Oberseite.

5. Scheibenventil (1) nach einem der Ansprüche 1 bis 4, **dadurch gekennzeichnet, dass** der Schieber (8) aufgrund seiner Umrissform formschlüssig im Gehäuse (2) verschiebbar und drehfest gehalten ist.

6. Scheibenventil (1) nach einem der Ansprüche 1 bis 5, **dadurch gekennzeichnet, dass** die Ventilscheibe (5) und/oder die Steuerscheibe (6) und/oder der Schieber (8) aus Keramik gefertigt sind oder zumindest eine ihrer Oberflächen aus Keramik gefertigt ist.

7. Scheibenventil (1) nach einem der Ansprüche 2 bis 6, **dadurch gekennzeichnet, dass** sich der Innenraum zumindest eines eingangsseitigen Abschnitts (2a) des Gehäuses (2) zumindest zur Aufnahme des Schiebers (8) du der Schiebenanordnung (5, 6) in Flussrichtung stufenförmig erweitert.

## Claims

1. Disc valve (1) with a housing (2) comprising a valve disc (5) and a control disc (6), which has a fluid inflow (3) and a fluid outflow (4), which are separated by the valve disc (5) and the control disc (6), wherein the control disc (6) is rotatably mounted to the valve disc (5) about an axis of rotation (D) running in the direction of flow and both discs are provided with at least one through opening (7) in each case, so that when the through openings (7) of the valve disc (5) and the control disc (6) are overlaid, it is possible for a fluid to flow along a direction of flow from the fluid inflow (3) to the fluid outflow (4), a slider (8) which can be moved in the direction of flow in the housing (2), which is arranged upstream of the valve disc (5) and the control disc (6), which is held such that it cannot rotate about the axis of rotation (D) and which has through openings (7), which correspond to those of the valve disc (5), as a facility for applying a fluid-pressure-dependent compressive force and seal elements (9) upstream and downstream of the disc arrangement (5, 6) in each case, wherein a seal element (9) is arranged between the slider (8) and an input-side valve disc (5) and the seal elements (9) are additionally embodied as a facility for applying a compressive pretensioning to the disc arrangement (5, 6), wherein the compressive force (F) resulting from a dimensioning of a pressure area and a fluid pressure of a pressurised fluid applied to the housing (2) in the intended manner lies on the slider (8) and thus on the disc arrangement (5, 6) via the pretensioning force which the facility generates for applying the compressive pretensioning, and wherein the slider (8) and thus the disc arrangement (5, 6), without the fluid pressure being applied to the housing (2), are only influenced by the pretensioning.

2. Disc valve (1) according to claim 1, **characterised in that** the housing (2) comprises individual sections (2a; 2b), which are joined to one another mechanically with tensile strength in the assembled state and can be detached from one another.

3. Disc valve (1) according to 1 or 2, **characterised by** an inlet space (10) between the fluid inflow (3) and the slider (8).

4. Disc valve (1) according to claim 3, **characterised by** a concave curved part in the slider (8) on the upper side thereof facing the fluid inflow (3).

5. Disc valve (1) according to one of claims 1 to 4, **characterised in that** the slider (8) is held in the housing (2) with a form fit such that it can be displaced and cannot be rotated, due to the shape of its outline.

6. Disc valve (1) according to one of claims 1 to 5, **characterised in that** the valve disc (5) and/or the control disc (6) and/or the slider (8) are made of ceramic or at least one of their surfaces is made of ceramic.

7. Disc valve (1) according to one of claims 2 to 6, **characterised in that** the interior of at least one input-side section (2a) of the housing (2) expands in stages with respect to the disc arrangement (5, 6) in the direction of flow, at least to receive the slider (8).

## Revendications

1. Soupape à disques (1) comprenant
un corps (2) comportant un disque de soupape (5) et un disque de commande (6), lequel corps comporte une conduite d'amenée de fluide (3) et une conduite de dérivation de fluide (4) séparées par le disque de soupape (5) et le disque de commande (6), dans laquelle le disque de commande (6) est monté en rotation par rapport au disque de soupape (5) autour d'un axe de rotation (D) s'étendant dans le sens du flux et les deux disques sont pourvus chacun d'au moins un orifice de passage (7), de telle sorte que, lors d'une superposition des orifices de passage (7) du disque de soupape (5) et du disque de commande (6), un écoulement de fluide est possible selon une direction d'écoulement de la conduite d'amenée de fluide (3) jusqu'à la conduite de dérivation de fluide (4),
un tiroir (8) mobile dans le sens du flux dans le corps (2) qui est disposé en amont du disque de soupape (5) et du disque de commande (6), qui est maintenu fixe en rotation autour de l'axe de rotation (D) et qui comporte des orifices de passage (7) correspondant à ceux du disque de soupape (5), à titre de dispositif pour appliquer une force de compression fonction de la pression du fluide, et
des éléments d'étanchéité (9) respectivement en amont et en aval de l'agencement de disques (5, 6),
dans laquelle un élément d'étanchéité (9) est disposé entre le tiroir (8) et un disque de soupape du côté entrée (5) et les éléments d'étanchéité (9) sont configurés en outre sous forme de dispositif permettant d'appliquer une précontrainte de compression sur l'agencement de disques (5, 6),
dans laquelle la force de compression (F) résultant d'un dimensionnement d'une surface de pression et d'une pression d'un fluide sous pression adjacent au corps (2) conformément à l'emploi prévu, sur le tiroir (8) et ainsi sur l'agencement de disques (5, 6) est supérieure à la force de précontrainte produite par le dispositif d'application de la précontrainte de compression et dans laquelle le tiroir (8) et ainsi l'agencement de disques (5, 6) sont uniquement sous l'effet de la précontrainte lorsque la pression de fluide adjacente au corps n'est pas présente.

2. Soupape à disques (1) selon la revendication 1, **caractérisée en ce que** le corps (2) comprend des parties individuelles (2a, 2b) qui sont jointes l'une à l'autre mécaniquement de façon résistante en traction à l'état monté et sont détachables l'une de l'autre.

3. Soupape à disques (1) selon la revendication 1 ou 2, **caractérisée par** une chambre d'admission (10) entre la conduite d'amenée de fluide (3) et le tiroir (8).

4. Soupape à disques (1) selon la revendication 3, **caractérisée par** une courbure concave dans le tiroir (8) sur son côté supérieur tourné vers la conduite d'amenée de fluide (3).

5. Soupape à disques (1) selon l'une des revendications 1 à 4, **caractérisée en ce que** le tiroir (8) peut être déplacé et est maintenu fixe en rotation dans le corps (2) par complémentarité de forme en raison de sa forme de contour.

6. Soupape à disques (1) selon l'une des revendications 1 à 5, **caractérisée en ce que** le disque de soupape (5) et/ou le disque de commande (6) et/ou le tiroir (8) sont fabriqués en céramique ou au moins une de leurs surfaces est fabriquée en céramique.

7. Soupape à disques (1) selon l'une des revendications 2 à 6, **caractérisée en ce que** l'espace intérieur d'au moins une partie (2a) du côté entrée du corps (2) s'élargit progressivement dans le sens du flux au moins pour loger le tiroir (8) et l'agencement de disques (5, 6).
